# EUROPEAN PATENT SPECIFICATION

(11) **EP 1 672 458 B1**
(45) Date of publication and mention of the grant of the patent: **12.08.2009**
(21) Application number: 05380091.8
(22) Date of filing: 06.05.2005
(51) Int. Cl.: G05D 16/06

(54) **Liquid pressure regulator**
Fluiddruckregler
Détendeur de fluide

(30) Priority: 14.12.2004 ES 200402960
(43) Date of publication of application: 21.06.2006
(73) Proprietor: GOIZPER, S. COOP., E-20577 Anzuola Guipuzcoa (ES)
(72) Inventor: Irizar Igarzabel, Miguel Angel, 20577 Antzuola (Guipuzkoa) (ES)
(74) Representative: Durán Moya, Carlos

(56) References cited:
- EP-A- 0 629 936
- WO-A-95/10079
- GB-A- 742 117
- GB-A- 1 502 857
- GB-A- 2 155 593
- US-A- 3 699 998
- US-A- 4 022 114
- US-A- 4 776 368
- US-A1- 2003 164 190

## Description

The present invention is intended to disclose pressure regulator for liquids, in particular for achieving stable spraying in hand-operated agricultural and garden sprayers and the like, for treating large areas.

As is known, the spray characteristics such as flow, angle, distribution, appearance of the liquid stream, droplet size, etc., which can be obtained with a hand sprayer, depend on the type of nozzle and the pressure of the liquid at the outlet thereof. However, application of a liquid by means of a hand sprayer involves a fluctuation in the outflow pressure as a function of the velocity of the piston thrust which brings about a variable flow and dispersion in the droplet size, reducing the efficiency of application and producing an increase in contamination for both the person carrying out the application and the environment.

Document US 3 699 998 discloses a pressure regulator which is capable of being calibrated, thus dispensing with the need of providing the pressure regulator with an additional pressure gauge. The pressure regulator comprises a regulator body defining an inlet passageway, an outlet passageway and a valve seat passageway interconnecting inlet and outlet passageway. A movable valve element cooperates with the valve seat formed by valve seat passageway. The calibration is performed by a manually operable screw-threaded pressure control member arranged in coaxial relation to valve element and having an abutment surface engaged by the other end of calibrating spring.

An object of the pressure regulator according to the present invention is to achieve an outflow of liquid at constant pressure, to allow the generation of droplets with much reduced dispersions in diameter and to optimise use of the volume of the chemical product applied.

The pressure regulator according to the present invention substantially comprises a main body with openings for the admision and outflow of liquid, a pressure-regulating valve with a diaphragm-type closure which is subjected to the action of a spring, a combined intermediate throttle valve and a device for eliminating pressure or for depressurisation of the regulator. Furthermore, the regulator according to the present invention comprises very simple means for achieving two distinct outflow pressure values, one of which is much higher than the other, a fact which is achieved simply by changing the position of an asymmetrical abutment piece of the spring and then disassembling an external closure cap.

For the purpose of better understanding there follow, by way of non-limiting example, some drawings of a liquid pressure regulator according to the present invention.

Fig. 1 shows a complete section of the regulator.

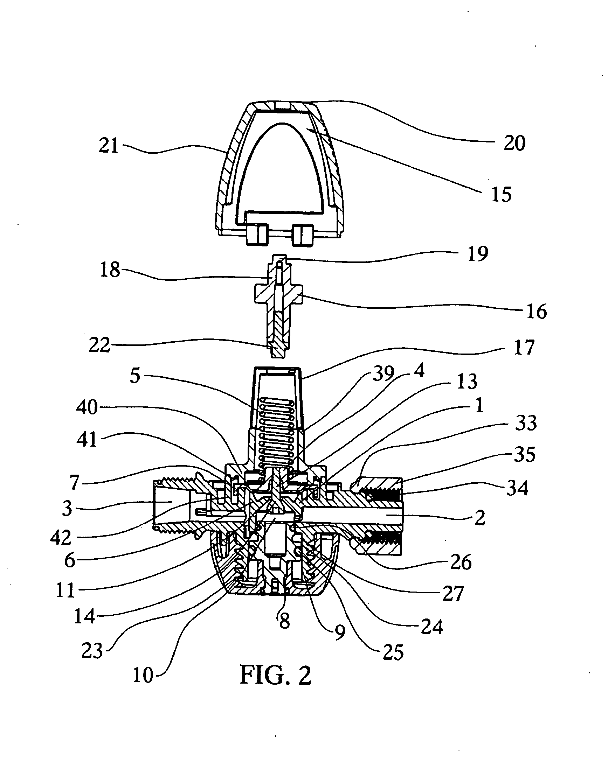

Fig. 2 shows a section of the regulator partially disassembled.

Fig. 3 and 4 show respective details in section of the depressuriser.

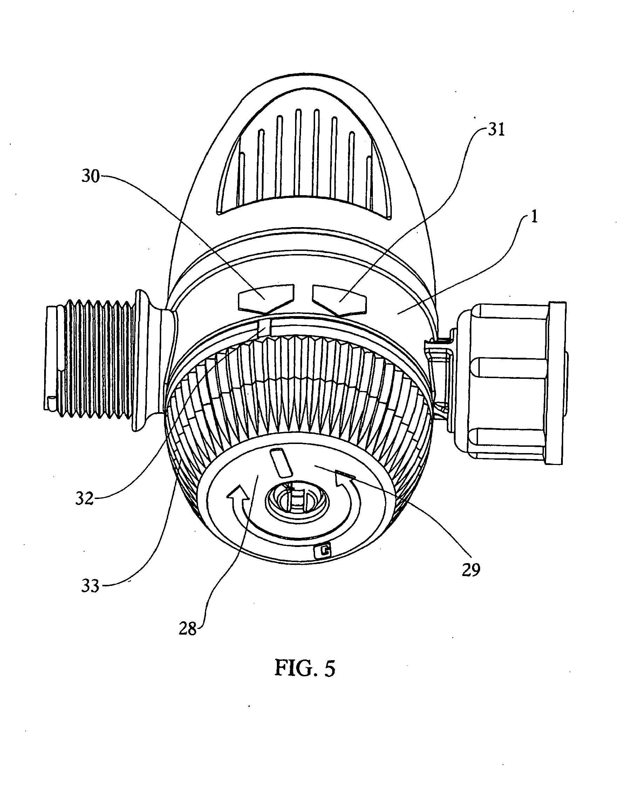

Fig. 5 shows a perspective view of the regulator.

Fig. 6 shows a perspective view of the regulator with the control and exit assembled.

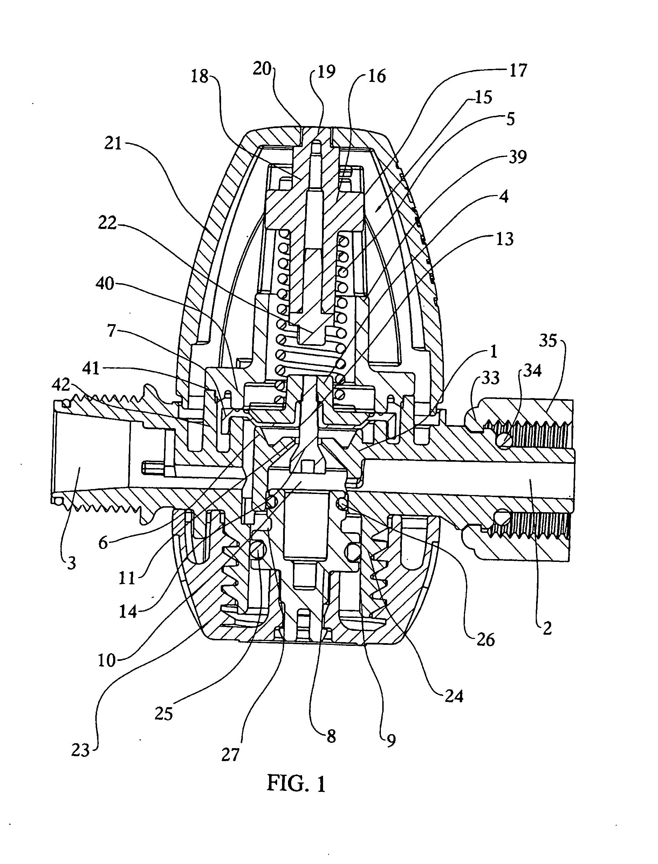

Fig. 1 shows the pressure regulator in which a main body 1 comprises the liquid entrance 2 and, at the opposite end, the exit 3, combined with the action of an internal throttle valve 14 connected to an intermediate closure plate 4 which is subjected to the action of the spring 5 and which acts on an internal closure flange 6 of the body by means of the diaphragm 7.

A lower cylindrical body or depressurisation plug 8 which is accommodated in the interior of the cylindrical recess 9 of the body 1 carries out closure or depressurisation as will be explained below.

The illustrated regulator is arranged with its entrance 2 connected to a pressure liquid supply by a manual piston pump and its exit 3 to the spraying nozzle.

When the pressure liquid enters the chamber 10 of the regulator, it passes through the orifice 11 of the body 1, acting by means of the diaphragm on the valve plate 4 such that when the pressure of the spring 5 is overcome, said valve is raised, throttling the valve passage 14 which is conical and connected to the plate 4 with respect to the orifice 11. Raising of the plate 4 allows passage of the liquid toward the exit 3 connected to the nozzle, so spraying commences.

The throttle valve 14 is connected by ultrasound welding of its pin 13 to the plate 4 which is subjected to the action of the spring 5 and acts on the diaphragm 7 which is trapped between the pin 13 of the throttle valve 14 and the neck of the plate 4 in which said pin is ultrasonically welded. Therefore, displacement of the diaphragm corresponds to displacement of the plate 4 as well as to displacement of the throttle valve with pin 13 and conical head 14. The throttling produced by the action between the cone 14 and the opening 11 generates a loss in load, for which reason the spring 5 can again overcome the force of the liquid, arriving at the other position of equilibrium. The pressure of the sprayed liquid is kept constant by this equilibrium.

Different liquid outflow pressures can be obtained by changing the pressure of the spring 5. According to the present invention, the regulator is calibrated to two outflow pressures, one lower one and one higher one, for example 1.5 and 3 bar, by means of the change in the position of an upper asymmetrical abutment piece 15 receiving the end of the spring 5. Said upper abutment piece 15 comprises an external tubular element 16 equipped with the flange or thickened part 17 for receiving the spring 5 and which, at the top, comprises an extension 18 terminating in a centring prong 19 which fits into the upper opening 20 of the exterior cover 21 which is coupled so as to be capable of quick assembly and disassembly, for example by means of a bayonet coupling, relative to the body 1. The distance between the faces of the flange 17 and the respective ends of the body are different such that, by disassembling the cover 21 and inverting the piece 15, two spring pre-stressing positions can be achieved, one of which is shown in Fig. 1 and the other corresponding to the inversion of said piece 15 with which centring is established in the opening 20 by means of the lower prong 22 which makes the piece 15 asymmetrical, i.e. the above-mentioned difference in length, this signifying greater compression of the spring 15. Two pressure adjustment values of the regulator can thus be easily achieved.

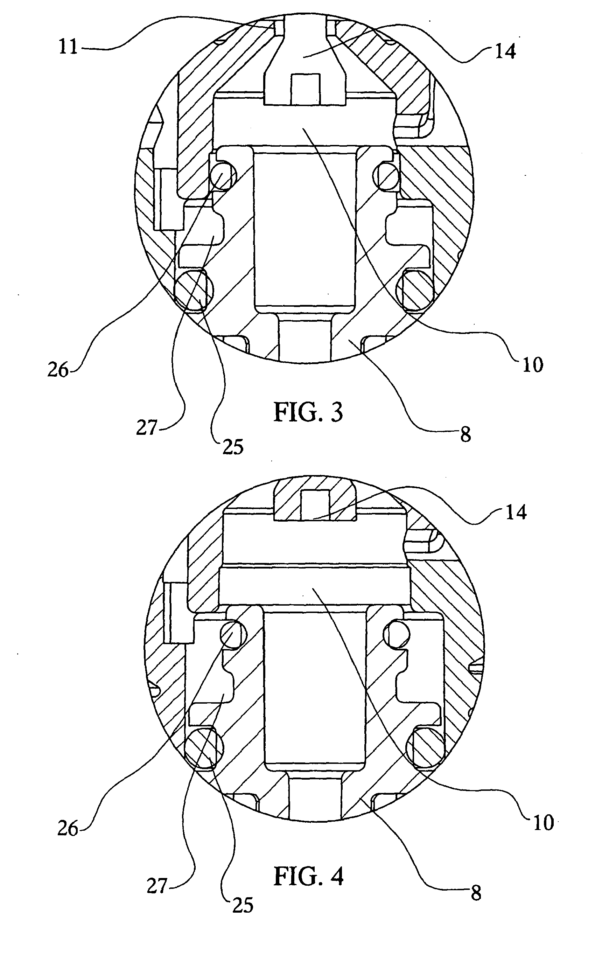

The pressure regulator according to the present invention also comprises means for eliminating pressure in the chamber 10, allowing free outflow of the liquid, for which reason the lower displaceable body 8 abuts a lower cover 23 screwed into a tubular extension 24 of the body 1 and comprises two closure O-rings 25 and 26, which act on the orifice 9 and on a smaller diameter orifice of said body respectively, thus closure the chamber 10, as illustrated in Fig. 3. By partially unscrewing the lower cover 23, the O-ring 26 stops closing the passage toward the chamber 10, thus producing depressurisation by means of the passage 27, as is illustrated in Fig. 4. This application is of particular interest for eliminating the pressure of the regulator and part of the circuit for the entrance of the liquid, at the end of the use thereof, avoiding the danger of contamination to the user.

It will be understood therefore that the indicated construction of the pressure regulator according to the present invention means that three different regulation positions may be achieved very simply and easily, two of which are for two different liquid outflow pressures and the third for depressurisation or free passage since, as has been indicated, in the depressurisation position the chamber 10 communicates with the exit 3 by means of a passage 27. The function of eliminating pressure is particularly beneficial when it is necessary to achieve some type of manipulation of the attachments in the portion of the circumference upstream of the regulator, because when the ingress pressure is less than that measured, closure produced by the spring brings about pressurisation of all of said section, for which reason said manipulation, for example for cleaning, etc., involves an increased risk of contamination since the treatment product can emerge under pressure toward the user or the environment.

The position of free outflow or elimination of the pressure can be conveniently indicated in the cover 23 by means of inscriptions, which are not shown, in the zones 28 and 29 to indicate the regulator pressure and depressurisation positions. Said indications may also be arranged in the body 1 itself of the regulator by means of small arrows 30 and 31 or the like intended to coincide with a fixed indicator 32 in the lower cover 23.

To allow continuous visibility of the pressure indicator when it is being used, the upper part of the buttons 19 and 22 are to carry the corresponding indication and are to be visible at any instant by being able to turn the regulator with respect to the nozzle without the possibility of losing liquid owing to the arrangement of a special connecting nut 35, Fig. 1, which is capable of turning by means of an internal rib 33 that is introduced under pressure into a corresponding groove of the tubular ingress element 2 of the body 1. An internal toric coupling 34 guarantees a seal at any time, allowing said turning.

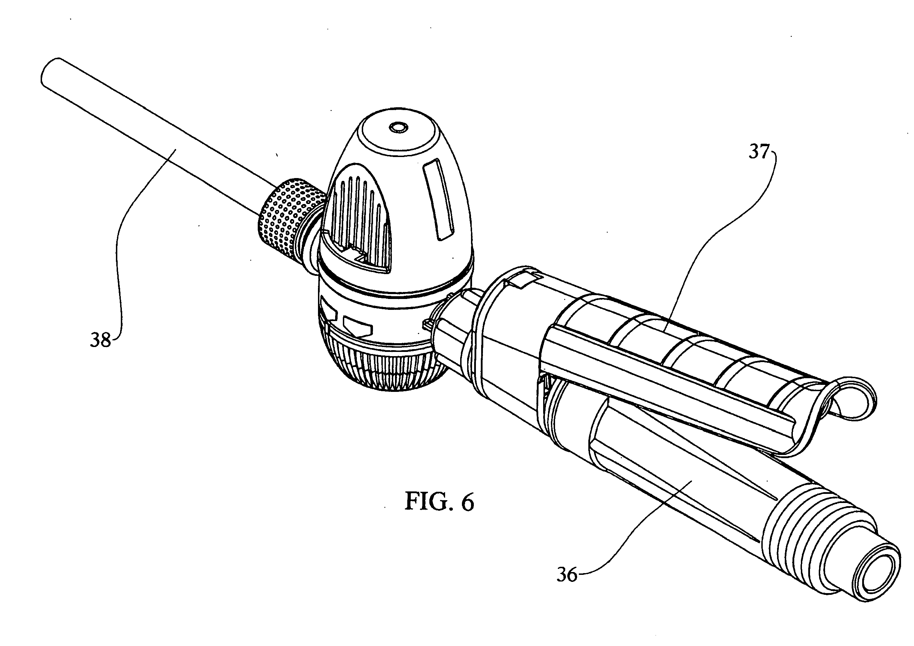

Fig. 6 shows an arrangement of the regulator between the liquid ingress 36 carrying the manual control 37 and the outflow 38 toward the spray nozzle.

To seal the external edge of the diaphragm 7, the pressure regulator according to the present invention has an upper body 39 enclosing the spring 5 and which, at the bottom, widens to create a circular flange 40 which presses on the diaphragm 7 producing sealing thereof and also having a step 41 abutting a projecting zone 42 of the body, allowing ultrasonic welding thereof. The upper body 39 enclosing the spring 5 is thus connected and the diaphragm 7 is held in a sealed manner, closing the chamber 10 at the top.

As will be understood, by means of said arrangement of elements it is possible to achieve a liquid pressure regulator which involves a simple variation in the supply pressure, a pressure elimination function of the remaining circumference of the entrance and a free passage position as well as efficient sealing of the diaphragm.

## Claims

1. Liquid pressure regulator of the type comprising a main body (1) with a closure diaphragm (7) on which a spring (5) acts, said body comprising an entrance (2) for the pressure liquid and an exit (3) toward the pressure liquid application apparatus, **characterised in that**, at the bottom, the body comprises a closure plug (8) with an adjustable axial position for achieving a depressurisation position or free passage, and, at the top, the compression spring (5) on the diaphragm (7) abuts against a flange of an asymmetrical abutment piece (15), the inversion of which brings about two different preloading positions of the spring providing two regulator adjustment pressures.

2. Liquid pressure regulator according to claim 1, **characterised in that** the body (1) comprises internally an opening (11) for the passage of liquid which is crossed by the pin (13) of a throttle valve (14) with a conical head connected to a plate (4) which receives the pressure of the regulating spring (5).

3. Liquid pressure regulator according to claim 2, **characterised in that** the pin (13) of the valve (14) with a conical head is joined by ultrasonic welding to the plate (4) which receives the spring.

4. Liquid pressure regulator according to claim 1, **characterised in that** the regulator body (1) comprises a flange (6) for the diaphragm (7) capable of closing the passage toward the regulator exit when the liquid pressure is below the pressure produced by the spring (5).

5. Liquid pressure regulator according to claim 1, **characterised in that** the regulating spring (5) is enclosed in an upper body (39) which, at the bottom, comprises a step (41) which matches a land of the main body (1) to which it is connected by welding and a circular flange (40) which exerts pressure on the diaphragm, retaining the same in a sealed manner.

6. Liquid pressure regulator according to claim 5, **characterised in that** the body (39) enveloping the spring is ultrasonically welded to the circular flange (40).

7. Liquid pressure regulator according to claim 1, **characterised in that** the abutment piece (15) has an elongate construction with an intermediate flange (17) disposed asymmetrically with respect to its ends, said piece also comprising respective prongs (19,22) capable of lining up with an opening in a upper cover (21) of the regulator, allowing observation of the pressure regulation position from the exterior.

8. Liquid pressure regulator according to claim 1, **characterised in that** the upper cover (21) of the regulator can be disassembled to allow inversion of the interior asymmetrical part of the abutment piece (15), to achieve the two pre-tensioned positions of the spring and therefore pressure regulation.

9. Liquid pressure regulator according to claim 1, **characterised in that** the lower depressurisation plug (8) comprises two cylindrical zones with different diameters and equipped with respective O-ring seals (25,26), one of which is coupled to a lower cylindrical extension of the main body (1) and the second being coupled to a more constricted zone of the regulator body (1) which, at the top, limits the internal liquid chamber (10) and, at the bottom, communicates with the liquid exit (3) and is capable, by axial displacement, of putting the internal chamber (10) of the regulator in direct communication with the liquid exit (3) to facilitate depressurisation with free outflow of liquid.

10. Liquid pressure regulator according to claim 9, **characterised by** the arrangement of a threaded lower cover (23) on the body against which the axial depressurisation plug (8) abuts and by partial unscrewing of said cover (23), allows the depressurisation position or free passage position for communication of the internal chamber (10) of the regulator with the exit (3) thereof to be achieved.

11. Liquid pressure regulator according to claim 1, **characterised by** the arrangement of a nut (35) at the pressure liquid entrance in the regulator, capable of maintaining the pressure by an internal peripheral rib (33) in a groove of the regulator body (1) and which is combined with a toric coupling (34) to allow sealed closure of the connection and simultaneously allow turning of the regulator for observation at any instant of the exterior marks (30, 31, 32) indicating the pressure regulation.

## Patentansprüche

1. Flüssigkeitsdruckregulierer des Typs, der einen Körper (1) mit einer Hauptverschlussmembran (7), auf die eine Feder (5) wirkt, umfasst, wobei der Körper einen Einlass (2) für die mit Druck beaufschlagte Flüssigkeit und einen Auslass (3) zu der Vorrichtung, auf die die mit Druck beaufschlagte Flüssigkeit angewendet wird, aufweist, **dadurch gekennzeichnet, dass** der Körper an der Unterseite einen Verschlussstopfen (8) mit einer einstellbaren axialen Position umfasst, um eine Druckentlastungsposition oder einen freien Durchgang zu erzielen, und an der Oberseite die Druckfeder (5) auf der Membran (7) an einem Flansch eines asymmetrischen Anschlagteils (15) anliegt, dessen Umdrehen zwei verschiedene Vorbelastungspositionen der Feder schafft, die zwei Regulierereinstelldrücke ergeben.

2. Flüssigkeitsdruckregulierer nach Anspruch 1, **dadurch gekennzeichnet, dass** der Körper (1) innen eine Öffnung (11) für den Durchgang von Flüssigkeit umfasst, die von dem Schaft (13) eines Drosselventils (14) mit konischem Kopf durchquert wird, der mit einer Platte (4) verbunden ist, die den Druck der Reguliererfeder (5) aufnimmt.

3. Flüssigkeitsdruckregulierer nach Anspruch 2, **dadurch gekennzeichnet, dass** der Schaft (13) des Ventils (14) mit konischem Kopf durch Ultraschallschweißen mit der die Feder aufnehmenden Platte (4) verbunden ist.

4. Flüssigkeitsdruckregulierer nach Anspruch 1, **dadurch gekennzeichnet, dass** der Reguliererkörper (1) einen Flansch für die Membran (7) umfasst, die den Kanal zu dem Reguliererauslass verschließen kann, wenn der Flüssigkeitsdruck unter dem durch die Feder (5) erzeugten Druck liegt.

5. Flüssigkeitsdruckregulierer nach Anspruch 1, **dadurch gekennzeichnet, dass** die Reguliererfeder (5) von einem oberen Körper (39) umschlossen ist, der an der Unterseite eine Stufe (41), die zu einem Steg des Hauptkörpers (1) passt, mit dem sie durch Schweißen verbunden ist, und einen kreisförmigen Flansch (40), der auf die Membran einen Druck ausübt und diese abgedichtet hält, aufweist.

6. Flüssigkeitsdruckregulierer nach Anspruch 5, **dadurch gekennzeichnet, dass** der Körper (39), der die Feder umschließt, an den kreisförmigen Flansch (40) ultraschallgeschweißt ist.

7. Flüssigkeitsdruckregulierer nach Anspruch 1, **dadurch gekennzeichnet, dass** das Anschlagteil (15) einen länglichen Aufbau mit einem Zwischenflansch besitzt, der in Bezug auf seine Enden asymmetrisch angeordnet ist, wobei das Teil außerdem jeweilige Zinken (19, 22) aufweist, die auf eine Öffnung in einer oberen Abdeckung (21) des Regulierers ausgerichtet werden können und die Beobachtung der Druckregelungsposition von außen zulassen.

8. Flüssigkeitsdruckregulierer nach Anspruch 1, **dadurch gekennzeichnet, dass** die obere Abdeckung (21) des Regulierers zerlegt werden kann, um das Umdrehen des inneren asymmetrischen Teils des Anschlagteils (15) zuzulassen, um die zwei vorgespannten Positionen der Feder und daher die Druckregelung zu erzielen.

9. Flüssigkeitsdruckregulierer nach Anspruch 1, **dadurch gekennzeichnet, dass** der untere Druckentlastungsstopfen (8) zwei zylindrische Zonen mit unterschiedlichen Durchmessern aufweist und mit jeweiligen O-Ringdichtungen (25, 26) ausgerüstet ist, wovon eine mit einer unteren zylindrischen Verlängerung des Hauptkörpers (1) gekoppelt ist und die zweite mit einer stärker eingeschnürten Zone des Reguliererkörpers (1) gekoppelt ist, die an der Oberseite die innere Flüssigkeitskammer (10) begrenzt und an der Unterseite mit dem Flüssigkeitsauslass (3) kommuniziert und durch axiale Verlagerung die innere Kammer (10) des Regulierers in eine direkte Kommunikation mit dem Flüssigkeitsauslass (3) bringen kann, um die Druckentlastung bei freiem Ausfluss von Flüssigkeit zu erleichtern.

10. Flüssigkeitsdruckregulierer nach Anspruch 9, **gekennzeichnet durch** die Anordnung einer unteren Gewindeabdeckung (23) am Körper, an der der axiale Druckentlastungsstopfen (8) anliegt, und die **durch** teilweises Abschrauben der Abdeckung (23) zulässt, dass die Druckentlastungsposition oder die Position für freien Durchgang für die Kommunikation der inneren Kammer (10) des Regulierers mit dem Auslass (3) hiervon erzielt werden kann.

11. Flüssigkeitsdruckregulierer nach Anspruch 1, **gekennzeichnet durch** die Anordnung einer Mutter (35) am Druckflüssigkeitseinlass in den Regulierer, die den Druck **durch** eine innere Umfangsrippe (33) in einer Nut des Reguliererkörpers (1) aufrechterhalten kann und die mit einer torischen Kopplung (34) kombiniert ist, um einen dichten Verschluss der Verbindung zu ermöglichen und um gleichzeitig das Drehen des Regulierers zuzulassen, um zu jedem Zeitpunkt die äußeren Markierungen (30, 31, 32) beobachten zu können, die die Druckregulierung angeben.

## Revendications

1. Régulateur de pression de liquide du type comprenant un corps principal (1) avec un diaphragme de fermeture (7) sur lequel un ressort (5) agit, ledit corps comprenant une entrée (2) pour le liquide sous pression et une sortie (3) vers l'appareil d'application de liquide sous pression, **caractérisé en ce que**, au fond, le corps comprend un bouchon de fermeture (8) avec une position axiale réglable pour atteindre une position de dépressurisation ou passage libre, et, en haut, le ressort de compression (5) sur le diaphragme (7) prend appui contre une bride d'une pièce de butée asymétrique (15), dont l'inversion entraîne deux positions de précontrainte différentes du ressort fournissant deux pressions de réglage de régulateur.

2. Régulateur de pression de liquide selon la revendication 1, **caractérisé en ce que** le corps (1) comprend intérieurement une ouverture (11) pour le passage de liquide qui est traversée par la tige (13) d'une soupape d'étranglement (14) avec une tête conique reliée à une plaque (4) qui reçoit la pression du ressort de régulation (5).

3. Régulateur de pression de liquide selon la revendication 2, **caractérisé en ce que** la tige (13) de la soupape (14) avec une tête conique est jointe par soudage par ultrasons à la plaque (4) qui reçoit le ressort.

4. Régulateur de pression de liquide selon la revendication 1, **caractérisé en ce que** le corps de régulateur (1) comprend une bride (6) pour le diaphragme (7) apte à fermer le passage vers la sortie de régulateur lorsque la pression de liquide est inférieure à la pression produite par le ressort (5).

5. Régulateur de pression de liquide selon la revendication 1, **caractérisé en ce que** le ressort de régulation (5) est enfermé dans un corps supérieur (39) qui, au fond, comprend un épaulement (41) qui correspond à une plage du corps principal (1) à laquelle il est relié par soudage et une bride circulaire (40) qui exerce une pression sur le diaphragme, retenant celui-ci de manière étanche.

6. Régulateur de pression de liquide selon la revendication 5, **caractérisé en ce que** le corps (39) enveloppant le ressort est soudé par ultrasons à la bride circulaire (40).

7. Régulateur de pression de liquide selon la revendication 1, **caractérisé en ce que** la pièce de butée (15) présente une construction oblongue avec une bride intermédiaire (17) disposée asymétriquement par rapport à son extrémité, ladite pièce comprenant également des fourchons respectifs (19, 22) aptes à s'aligner avec une ouverture dans un couvercle supérieur (21) du régulateur, permettant l'observation de la position de régulation de pression à partir de l'extérieur.

8. Régulateur de pression de liquide selon la revendication 1, **caractérisé en ce que** le couvercle supérieur (21) du régulateur peut être désassemblé pour permettre l'inversion de la partie asymétrique intérieure de la pièce de butée (15), pour atteindre les deux positions précontraintes du ressort et donc la régulation de pression.

9. Régulateur de pression de liquide selon la revendication 1, **caractérisé en ce que** le bouchon de dépressurisation inférieur (8) comprend deux zones cylindriques avec des diamètres différents et équipées de joints toriques respectifs (25, 26), dont un est couplé à un prolongement cylindrique inférieur du corps principal (1) et le second est couplé à une zone plus étranglée du corps de régulateur (1) qui, en haut, limite la chambre de liquide interne (10) et, au fond, communique avec la sortie de liquide (3) et est capable, par déplacement axial, de mettre la chambre interne (10) du régulateur en communication directe avec la sortie de liquide (3) pour faciliter la dépressurisation avec une sortie libre de liquide.

10. Régulateur de pression de liquide selon la revendication 9, **caractérisé par** l'agencement d'un couvercle inférieur fileté (23) sur le corps contre lequel le bouchon de dépressurisation axial (8) prend appui et, par dévissage partiel dudit couvercle (23), permet d'atteindre la position de dépressurisation ou position de passage libre pour la communication de la chambre interne (10) du régulateur avec sa sortie (3).

11. Régulateur de pression de liquide selon la revendication 1, **caractérisé par** l'agencement d'un écrou (35) à l'entrée de liquide sous pression dans le régulateur, apte à maintenir la pression par une nervure périphérique interne (33) dans une rainure du corps de régulateur (1) et qui est associé à un couplage torique (34) pour permettre la fermeture étanche de la liaison et simultanément permettre la rotation du régulateur pour une observation à tout instant des marques extérieures (30, 31, 32) indiquant la régulation de pression.
